Europäisches Patentamt

European Patent Office

Office européen des brevets

(11) Veröffentlichungsnummer: **0 092 837**
A2

# (12) EUROPÄISCHE PATENTANMELDUNG

(21) Anmeldenummer: 83104052.2

(22) Anmeldetag: 26.04.83

(51) Int. Cl.³: **A 63 B 5/18**
**D 06 N 7/00**

(30) Priorität: 27.04.82 DE 3215599

(43) Veröffentlichungstag der Anmeldung:
02.11.83 Patentblatt 83/44

(84) Benannte Vertragsstaaten:
AT BE CH DE FR GB IT LI LU NL SE

(71) Anmelder: Masnick, Peter
Liboristrasse 24a
D-4600 Dortmund 1(DE)

(72) Erfinder: Masnick, Peter
Liboristrasse 24a
D-4600 Dortmund 1(DE)

(74) Vertreter: Schulze Horn, Hannes, Dr.-Ing.
Im Defdahl 51
D-4600 Dortmund 1(DE)

(54) Gymnastikmatte, insbesondere Heimgymnastikmatte.

(57) Bei einer Gymnastikmatte, insbesondere Heimgymnastikmatte, mit einer Bodenschicht, einer Deckschicht sowie
gegebenenfalls Zwischenschichten, wird vorgeschlagen,
daß die Bodenschicht ein im Verhältinis zu seiner Erstreckung relativ flaches, senkrecht zu seiner Fläche federnd
wirkendes Formteil aus elastischem Material ist, das von
einer Vielzahl annähernd regelmäßig angeordneter, Ober-
und Unterseite des Formteiles verbindender Stege aus
elastischem Werkstoff gebildet wird. Die zellenartige Oberseite des Formteiles ist vorzugsweise durch eine die Stege
verbindende Deckplatte verschlossen, an der Unterseite
jedoch offen. Als Deckschicht über individuell wählbaren
Zwischenschichten ist ein abnehmbarer Bezug aus waschbarem, strapazierfaßhigem Tuch vorgesehen, der vorzugsweise an seiner Randpartie elastisch eingekräuselt ist.

FIG. 1

## Beschreibung

Die Erfindung betrifft eine Gymnastikmatte, insbesondere eine Heimgymnastikmatte, mit einer Bodenschicht, einer Deckschicht sowie gegebenenfalls Zwischenschichten.

Gymnastikmatten, Turn- und/oder Sprungmatten etc. sind in vielfacher Ausführung mit unterschiedlichen Polsterungen bekannt. Ihre Ausgestaltung und Eigenschaften wie Elastizität, relative Härte und/oder Dämpfungsvermögen werden nach Maßgabe des Anwendungsbereiches oder Verwendungszweckes gewählt. Beispielsweise enthalten sogenannte Sprungmatten zum Auffangen von Springern relativ dicke, weiche Schaumstoff-Einlagen. Matten zum Bodenturnen sind dagegen relativ hart und enthalten eine Polsterung aus Roßhaar oder Nylon-Wolle. Es ist üblich, derartige Matten sowohl aus hygienischen Gründen, als auch zum Schutz vor Zerstörungen, mit einem auswechselbaren, waschbaren, strapazierfähigen Überzug zu versehen, siehe zum Beispiel die DE-OS 15 78 568.

Die meisten, in den letzten Jahrzehnten bekannt gewordenen Matten weisen Polsterkörper aus Kunststoff-Schaum, etwa Polyurethan-Weichschaum, auf. Beispielsweise wird in der DE-OS 21 24 627 eine Sportmatte vorgeschlagen, deren Umhüllung einen Kern aus Schaumstoff bzw. Schaumstoffverbund einschließt, wobei als Umhüllung ein feinmaschiges, netzartiges Gewebe oder Gewirk dient, das mit treibmittelhaltigem Kunststoff, zum Beispiel Polyvinylchlorid, Polyamid, Polyester, synthetischem oder Naturlatex so getränkt ist, daß eine innige Verbindung zwischen dem Schaumstoff und der netzartigen Umhüllung zustande kommt.

Die weitverbreitete Verwendung von Schaum-Kunststoffen als elastische Polster bei Sportmatten ist darauf zurückzuführen, daß diese wegen ihrer Dämpfungseigenschaften in den

0092837

meisten Fällen den an sie gestellten Anforderungen genügen, während andererseits Schaumstoff als handelsübliches Massen-Erzeugnis den Vorteil eines äußerst günstigen Preises hat. Andererseits aber haben Schaumstoff-Füllungen für eine Turnmatte zum Heimtraining den Nachteil, daß sie zwar nachgiebig sind und eine gewisse Dämpfungseigenschaft aufweisen, jedoch keine wesentliche Rückfederungseigenschaft, weil sie zu "weich" sind. Derartig weiche Polsterungen mögen - wie gesagt - für Sprungmatten, Turnmatten und ähnliche Matten richtig sein und den gestellten Anforderungen genügen. Jedoch für die sehr viel differenzierteren Anforderungen, wie sie insbesondere an Heimgymnastikmatten zu stellen sind, reichen die mit elastischen Schaumstoff-Füllungen, beziehungsweise Polsterungen, erzielbaren Eigenschaften bei weitem nicht aus. Denn die Beanspruchungen einer Gymnastikmatte für Heimtraining, wie beispielsweise bei Standlauf-, und/oder Standsprung-Übungen, wie Seilspringen, Liegestützen und dergleichen, erfordern eine andere, härtere Federwirkung, als diese mit einem Schaumstoff-Polster oder -kissen erreichbar ist. An die Erzielung und Einhaltung einer trainings-adäquaten Federkennlinie werden demnach bei einer Matte für Heimtraining Anforderungen gestellt, die wesentlichen höher sind als bei einer üblichen Turnmatte. Dabei spielt auch das Gewicht der Übenden eine Rolle. Und schließlich ist im Interesse von Unterbringung und Transport das Volumen und damit die Dicke einer Matte für Heimtraining gegenüber einer Turnmatte klein zu halten.

Aufgabe der vorliegenden Erfindung ist es, eine Gymnastikmatte, insbesondere ein Heimgymnastikmatte, anzugeben, welche mit Rücksicht auf die auf sie einwirkenden Kräfte und Beanspruchungen nicht nur ein gewisses Maß an Dämpfungswirkung aufweist, sondern auch ein gezielt vorgegebenes hohes Maß an Federwirkung besitzt und diese Anforderungen mit einer sehr flachen Ausgestaltung erreicht. Ein weiterer, für eine Matte zum Heimtraining

0092837

sehr wichtiger Teil der Aufgabenstellung ergibt sich darüberhinaus aus der Forderung, diese differenzierten Eigenschaften mit niedrigen Gestehungskosten zu realisieren und zu verbinden. Eine den Preisvorstellungen des privaten Verbrauchers nicht entsprechend preisgünstige Matte für heimgymnastische Übungen ist unverkäuflich.

Die Lösung der gestellten Aufgabe gelingt bei einer Gymnastikmatte der eingangs genannten Gattung, mit einer Bodenschicht, einer Deckschicht sowie gegebenenfalls einer Zwischenschicht dadurch, daß die Bodenschicht ein im Verhältnis zu seiner Erstreckung relativ flaches, senkrecht zu seiner Fläche federnd wirkendes Formteil ist, das eine Vielzahl von angeordneten Stegen aus elastischem Werkstoff aufweist, die zellenartige Hohlräume bilden.

Durch die Ausgestaltung der Gymnastikmatte nach der Erfindung gelingt es erstmals in überraschender Weise, bei einem im Verhältnis zu seiner Erstreckung relativ flachen Formteil, eine stark progressive Federwirkung gegebenenfalls mit einer gezielt vorgegebenen Federkennlinie, zu realisieren. Dies wird vorteilhaft durch das Zusammenwirken der die Ober- und Unterseite des Formteiles verbindenden Wandteile aus elastischem Werkstoff mit den von ihnen gebildeten zellenartigen Hohlräumen bewirkt, die je einzeln. wie luftgefüllte Gummifedern und in ihrer Vielzahl wie ein Federteppich oder wie ein Federkissen wirken.

In weiterer Ausgestaltung der Erfindung ist vorgesehen, daß die Hohlräume an der Oberseite des Formteiles durch eine sie verbindende Deckplatte verschlossen, an der Unterseite jedoch offen sind. Mit dieser Ausgestaltung wird in vorteilhafter Weise eine Dämfungswirkung erzielt, ähnlich der Funktion eines Stoßdämpfers. Beim Auftreten oder Aufspringen des Übenden verdrängen die sich zusammendrückenden Hohlräume Luft, welche zur Auflagefläche der Matte hin durch labyrinthartige Spalte unter Energieverbrauch ent-

Mas/83/1Eu
0092837

weicht. Mit einer dieser Ausgestaltung entsprechenden Guß- oder Spritzgußform wird zudem erreicht, daß nach einer weiteren Ausgestaltung des Formteils dieses ohne Schwierigkeit und vorteilhaft mit geringen Kosten aus elastischem Material einstückig formbar und entformbar hergestellt werden kann. Der Forderung nach preisgünstiger Herstellbarkeit der erfindungsgemäßen Gymnastikmatte wird dadurch optimal entsprochen. Als weiterer Vorteil wird ebenfalls durch diese Formgebung ein leichtes Gewicht und eine so weitgehende Elastizität des Formteiles erreicht, daß dieses nach Gebrauch ohne weiteres zusammengerollt und als Bündel bequem verstaut oder transportiert werden kann.

Dabei ist mit Vorteil weiter vorgesehen, daß die Wandteile annähernd vertikal oder schräg verlaufend, wabenförmige Hohlräume bildend, angeordnet sind. Durch diese Ausgestaltung ist eine definierte Federkennlinie erreichbar.

Die wabenförmigen Hohlräume können dabei in Vieleckform als Dreieck, als Viereck, als Sechseck etc. oder in Kreisform ausgebildet sein.

Dadurch, daß nach weiterem Vorschlag zur Ausgestaltung der Erfindung, die Wandteile im Verhältnis zur Querschnittsfläche eines Hohlraumes relativ dünnwandig und deren Wanddicke, Anordnung und gegebenenfalls Stellung zur Vertikalen nach Maßgabe der vorgesehenen Federwirkung veränderlich ausgebildet sind, kann die Progressivität der Federkennlinie des Formteiles beliebig eingestellt werden. Im Gegensatz zu bekannten Polsterungen mittels Schaumgummi ergibt sich hierdurch die Möglichkeit, Gymnastikmatten mit unterschiedlich starker Federwirkung, beispielsweise "schwach", "mittel", "stark" herzustellen, um diese optimal dem Körpergewicht der Übenden, wie Kindern, leichten oder schwergewichtigen Erwachsenen anzupassen; gegebenenfalls auch zur Anpassung an unterschiedliche Trainingsprogramme.

Ein anderer Herstellungsvorschlag sieht eine erfindungsgemäße Gymnastikmatte vor, bei welcher das Formteil je eine geschlossene Deckplatte und Bodenplatte und dazwischen einvulkanisierte, eingeschweißte oder eingeklebte, aus elastischem Material, vorzugsweise mittelweichem Gummi in Wellenform angeordnete Wandteile aufweist. Hierbei besteht die Möglichkeit für eine besonders rationelle Endlos-Herstellung, wofür lediglich eine einfache Durchlauf-Vulkanisations- oder Klebevorrichtung benötigt wird. Die Kosten für eine teure Form entfallen.

In weiterer zweckmäßiger Ausgestaltung ist vorgesehen, daß die Deckschicht als abnehmbarer Bezug aus waschbarem, strapazierfähigem Tuch ausgebildet ist, wobei der Bezug vorzugsweise an seiner Randpartie elastisch eingekräuselt über den Rand der Oberseite des Formteiles überstülpbar ausgebildet ist. Bei dem Tuch kann es sich einfach um Segeltuchstoff, Jeans-Stoff oder ähnliches handeln. Ein lediglich halbseitig übergestülpter, die Oberseite und Seitenpartien deckender Überzug, der die Unterseite frei läßt, ist dabei besonders preisgünstig, beeinträchtigt die Rutschfestigkeit nicht, läßt sich mühelos auf- und abziehen und einfach waschen.

Es ist dabei vorgesehen, daß der Bezug mit Verbindungselementen wie Ösen und Schnüren, Klettband, Druckknöpfen oder ähnlichem befestigt sein kann.

Schließlich ist noch vorgesehen, daß zwischen Oberseite und Bezug eine nachgiebige, vorzugsweise textile Zwischenschicht aus z.B. Dickfilz, teppichartigem Textilgewirk, Vließstoff, Schaumstoff oder ähnlichem angeordnet ist. Durch diese Einlage wird die Dämpfungseigenschaft der Mattenoberfläche verbessert. Weiterhin enthalten diese Stoffe ein Luftpolster, wodurch im Zusammenhang mit dem Tuchbezug das Gefühl einer weich-elastischen, hautsympatischen Natur-Unterlage vermittelt wird. Weiterhin wird bei Standlauf oder Standsprungübungen eine erhebliche Trittschalldämmung erzielt.

In weiterer Ausgestaltung der Erfindung ist dabei vorgesehen, daß die nachgiebige Zwischenschicht, vorzugsweise eine separate Hülle aufweisend, mehrlagig ausgebildet ist und z.B. eine rel. weiche Schaumstoffschicht sowie eine rel. harte textile Zwischenschicht aufweist. Durch eine Aufteilung der Zwischenschicht in zwei oder gegebenenfalls noch mehr Schichten kann das Trittverhalten der Heimgymnastikmatte noch weiter verbessert werden. Insgesamt läßt sich ein mit einer überraschend dünnen, preigünstigen Matte ein Lauf- oder Sprungverhalten erreichen, das elastischem Waldboden gleicht.

In weiterer Ausgestaltung der Erfindung ist dabei weiterhin vorgesehen, daß die mehrlagige Zwischenschicht aus einer zwei bis fünf, vorzugsweise drei cm dicken Krümelschaumschicht sowie einer dünneren Weichschaufschicht besteht. So ergibt sich eine besonders günstige Ausführung, die in Verbindung mit dem Boden-Formteil sehr gute Federungs- und Dämpfungseigenschaften aufweist und dabei besonders kostengünstig herstellbar ist.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

in Fig. 1    Eine Heimgymnastikmatte nach der Erfindung, teils in perspektivischer Ansicht, teils im Schnitt,

in Fig. 2    eine Heimgymnastikmatte mit einem Formteil mit verstärkter Federwirkung, ebenfalls im Schnitt,

Mas/83/1Eu
0092837

in Fig. 3   ein Formteil aus elastischem Werkstoff für eine Heimgymnastikmatte nach der Erfindung, teils in perspektivischer Ansicht, teils im Schnitt,

in Fig. 4   ein aus Deckplatte und Bodenplatte bestehendes Formteil mit dazwischen einvulkanisierten Wandteilen aus elastischem Material in Wellenform, im Schnitt,

in Fig. 5   eine Ansicht des Formteiles von der Unterseite her, mit in Kreisform angeordneten, wabenförmige Hohlräume bildendenden Wandteilen und

in Fig. 6   eine Ansicht des Formteiles von der Unterseite her gesehen, mit wabenförmigen Hohlräumen und Wandteilen in Sechseckform.

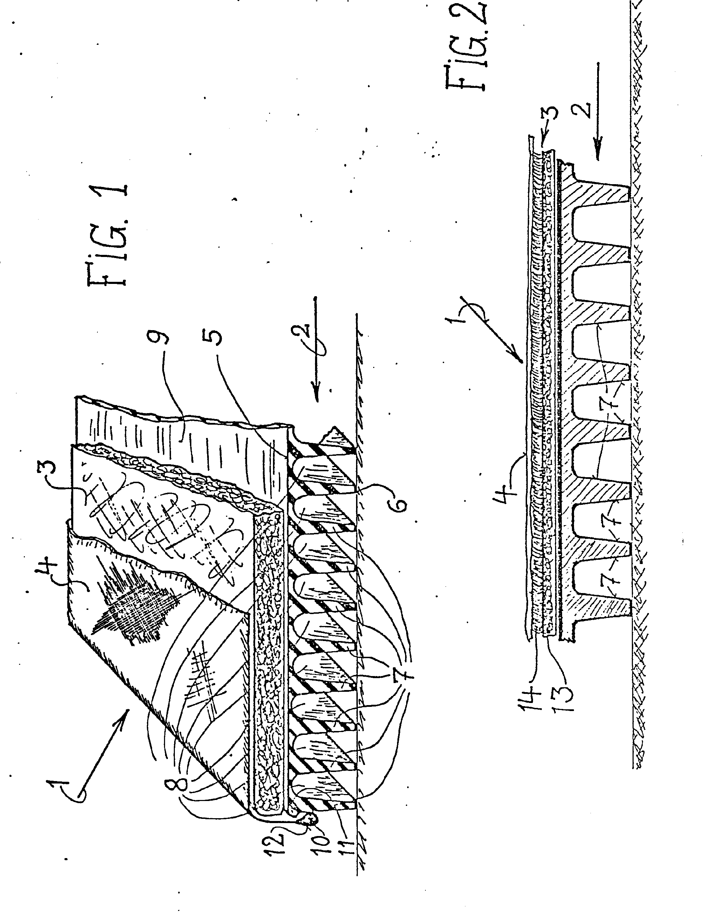

Die Heimgymnastikmatte nach Fig. 1 umfaßt als Bodenschicht ein relativ flaches Formteil 2, darauf als Zwischenschicht eine vorzugsweise textile Zwischenschicht 3 und schließlich als Deckschicht einen abnehmbaren Bezug 4 aus waschbarem, strapazierfähigem Tuch. Das Formteil 2 ist aus elastischem Material wie Gummi oder Kunststoff im Spritzverfahren mittels einer entsprechenden Form hergestellt und so gestaltet, daß es für die Herstellung einstückig formbar und entformbar ist. Es wird von einer Vielzahl annähernd regelmäßig angeordneter, Oberseite 5 und Unterseite 6 verbindender Wandteile 7 gebildet, die so angeordnet sind, daß sie zwischen sich zellenartige Hohlräume 8 bilden. Infolge dieser Ausgestaltung besitzt das Formteil 2 trotz seiner relativ flachen Gestaltung eine sehr starke Federwirkung. Dies hat vorteilhafterweise zur Folge, daß die Heimgymnastikmatte insbesondere bei starker

Mas/83/1Eu
0092837

Beanspruchung, beispielsweise durch Standlauf, Standsprung, Liegestütze, Bodenübungen etc. dem Übenden das angenehme Gefühl vermittelt, sich auf einer weich - elastischen Natur - Unterlage, wie Waldboden, zu bewegen. Dabei wirken die einzelnen Schichten der Heimgymnastikmatte 1 in sinnvoller Weise zum überraschenden Gesamtergebnis zusammen.

Das Formteil 2 liegt mit seiner Unterseite 6 mit Hilfe der Wandteile 7 unverrutschbar fest auf dem Boden auf und paßt sich dabei jedem Boden an. Damit erzielt die Gymnastikmatte nach der Erfindung eine Haftfestigkeit auf dem Boden, die mit derjenigen eines Autoreifens vergleichbar ist. Dies ist wichtig, denn nur eine rutschfest auf dem Boden aufliegende Gymnastikmatte bietet Sicherheit vor Stürzen und damit vor Unfällen. Die federnde Elastizität der Wandteile 7 wird dabei durch die zellenartigen Hohlräume weiter unterstützt. Beim Zusammendrücken der Wandteile durch örtlich hohe Belastung verringert sich das Volumen der zellenartigen Hohlräume. Die darin befindliche Luft wirkt wie eine Luftfeder. Mit Größe und Anordnung der zellenartigen Hohlräume 8 läßt sich demnach in unkomplizierter Weise die Federwirkung des Formteiles 2 den gegebenen Anforderungen weiter anpassen. Hierfür ist es von Vorteil, daß die Hohlräume 8 an der Oberseite 5 des Formteiles 2 durch eine sie verbindende Deckplatte 9 verschlossen, an der Unterseite 6 jedoch offen sind.

Im Zusammenwirken mit dem Formteil 2 hat die textile Zwischenschicht 3 eine wichtige Funktion. Da sie aus porösem Material, beispielsweise in Form von einem dicken Haarfilz hergestellt ist, wirkt die Zwischenschicht 3 bei Belastungsänderungen als kompressibles Luftkissen und sorgt für eine Belüftung der beanspruchten Stellen der Heimgymnastikmatte 1. Gleichzeitig damit übt die textile Zwischenschicht 3 eine sinnvolle Dämpfungswirkung aus, die vorzeitigen Ermüdungserscheinungen des Trainierenden entgegen wirkt. Und schließlich sorgt die Zwischenschicht 3

Mas/83/1Eu
0092837

für eine verstärkte Geräusch- und Temperaturdämmung. Insgesamt vermittelt damit die Zwischenschicht 3 durch ihre Funktion in überraschender Weise dem Übenden ein sehr angenehmes Gefühl von muskelfreundlicher und doch nicht zu weicher Nachgiebigkeit der Heimgymnastikmatte 1.

Der Bezug 4 aus strapazierfähigem Tuch wie Persenning, Segeltuch, Zeltstoff oder Mattentuch hat ebenfalls wichtige Funktionen. Er hält nämlich die vorzugsweise nur lose auf die Deckplatte 9 des Formteiles 2 aufgelegte textile Einlage 3 gegen Verrutschen fest. Bei der erfindungsgemäßen Verwendung von strapazierfähigem Tuch ist der Verschleiß des Bezugs 4 vernachlässigbar. Dadurch, daß der Bezug 4 leicht überstülpbar bzw. abnehmbar ist, läßt er sich ohne Mühe, beispielsweise zum Waschen, wechseln oder abnehmen. Er ist, wie in Fig. 1 beispielsweise gezeigt, am Rande mit einer Gummi - Schnur 10 eingefaßt und damit eingekräuselt.

Das Formteil 2 besitzt am Rande seiner Deckplatte 9 vorzugsweise einen umlaufenden nasenförmigen Vorsprung 11. Der Bezug 4 greift mit seiner durch die Gummischnur 10 eingekräuselten Randpartie 12 hinter diese Nase 11 und zwar rings um das gesamt Formteil 2. In dieser Lage sitzt der Bezug ohne weitere Haltemittel, lediglich von der Gummischnur eingekräuselt, absolut fest oberhalb von Formteil 2 und Zwischenschicht 3, wobei er beide zusammenhält.

Selbstverständlich kann, wie dies bei Heimgymnastikmatten an sich bekannt und vielfach ausgeführt ist, ein Bezug 4 auch mit Befestigungsmitteln wie Ösen, Verschnürungen, Klettband, Druckknöpfen oder ähnlichem befestigt sein. Diesen gegenüber hat jedoch die unkomplizierte, einfach zu handhabende Befestigung nach dem in Fig. 1 gezeigten Vorschlag nach der Erfindung infolge des Zusammentreffens von Zweckmäßigkeit und preisgünstiger Herstellbarkeit einen erheblichen Vorzug.

Die in Fig. 2 gezeigte Ausführungsform einer Heimgymnastikmatte 1 unterscheidet sich dadurch von der vorhergehend in Fig. 1 beschriebenen Matte 1, daß das Formteil 2 mit stärkeren Wandteilen 7 ausgeführt ist. Dies hat zur Folge, daß die Federkennlinie eine höhere Progressivität aufweist, was zu einer härteren Federwirkung führt. Dies kann bei hoher Beanspruchung und gegebenenfalls bei Übenden mit höherem Körpergewicht von Vorteil sein. Die Zwischenschicht 3 besteht aus einem teppichähnlichen Gewirk mit einer Fadenkette 13 und einem Teppichflor 14. Eine solche Ausgestaltung einer textilen Zwischenschicht wird subjektiv als sehr angenehm empfunden. Über der Zwischenschicht 3 befindet sich als Abschluß, wie auch bei dem in Fig. 1 gezeigten Beispiel, ein Bezug 4 aus strapazierfähigem Tuch.

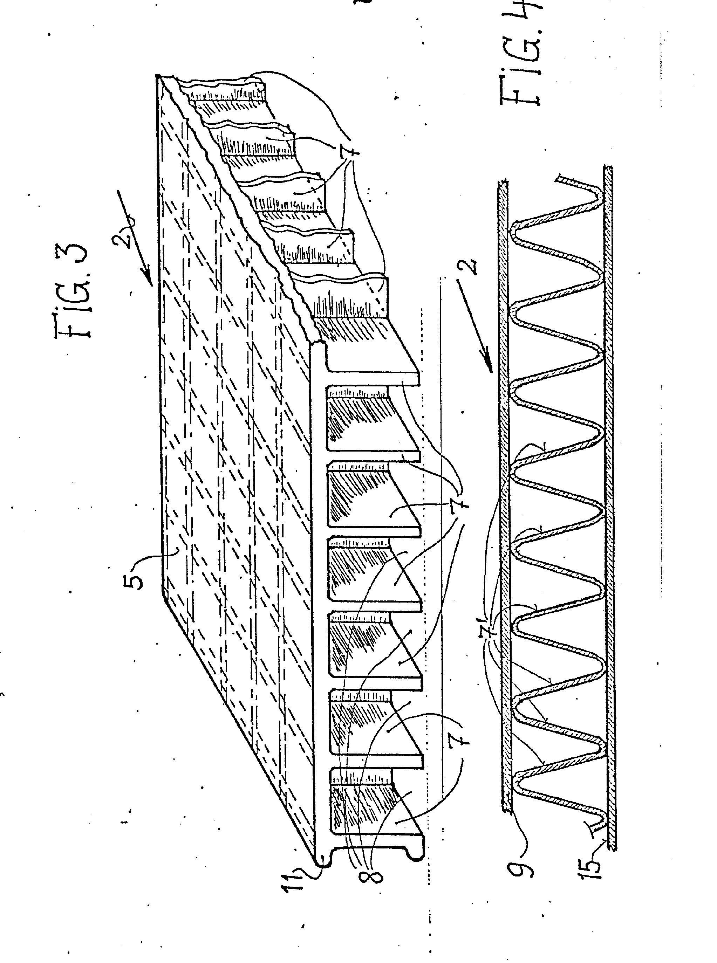

Fig. 3 zeigt ein Formteil 2, dessen Wandteile 7 wabenförmige Hohlräume 8 bilden. Diese sind in Viereckform angeordnet. Die Oberseite 5 des Formteils 2 läßt die gestrichelt angedeutete Wabenstruktur erkennen, die sich durch geringfügige Schrumpfungen des Formteiles nach dem Herausnehmen aus der Form andeutungsweise abzeichnen. Die umlaufende nasenförmige Randpartie 11, welche dem Abschluß und dem Halt der Randpartie 12 des Bezuges 4 dient, ist in der Darstellung deutlich erkennbar.

Fig. 4 zeigt im Schnitt ein andersartig gefertigtes Formteil 2. Dieses besteht aus einer geschlossenen Bodenplatte 15 und einer gleichartigen Deckplatte 9. Diese sind durch Wandteile 7' miteinander verbunden. Diese Wandteile 7' sind aus einem in Wellenform einvulkanisierten, eingeschweißten oder eingeklebten elastischen Bandmaterial gefertigt. Die Gegenüberstellung der Formgebung eines Formteils 2 nach Fig. 3 bzw. nach Fig. 4 zeigt die Unterschiede in der Fertigungsmöglichkeit auf. Während zur Herstellung eines Formteiles 2 nach Fig. 3 eine zumindest zweiteilige Form zur Herstellung des Formteiles im Kunststoff − Spritzverfahren benötigt wird, benötigt das Formteil nach

0092837

Fig. 4 nur eine Fertigungseinrichtung, mit welcher das elastische Material in Wellenform gelegt und anschließend in einem Endlos - Fertigungsprozeß einvulkanisiert, eingeklebt oder eingeschweißt wird.

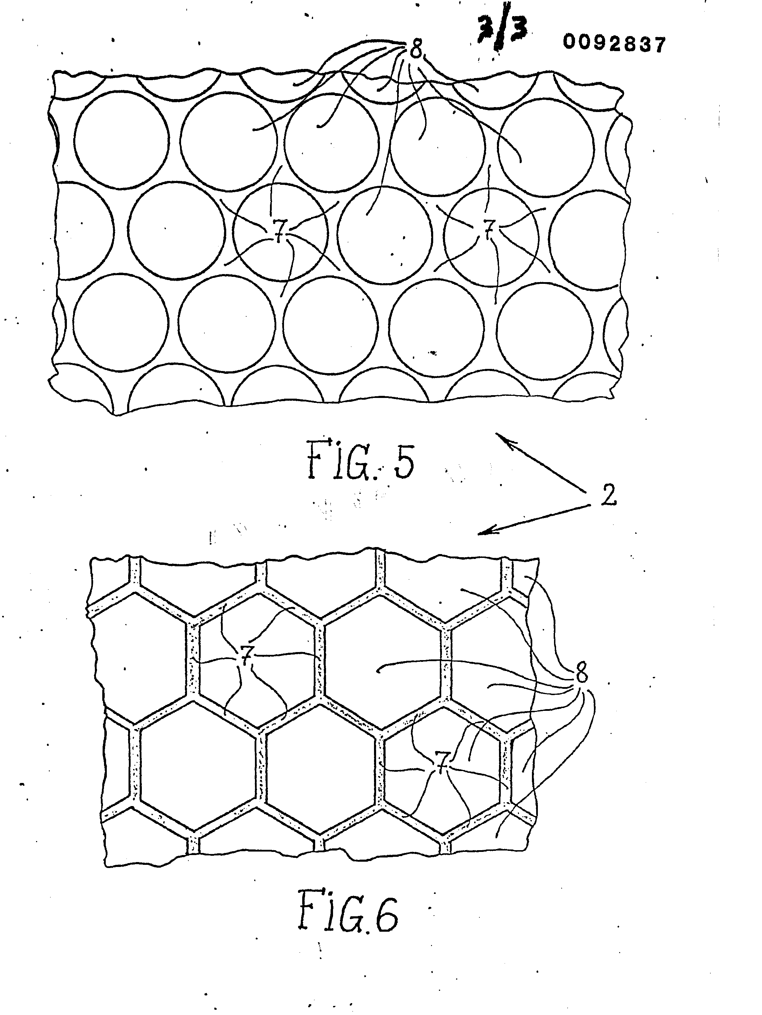

Ansichten von Formteilen 2 von deren Unterseite 6 her zeigen die Fig. 5 und 6. Bei der Ausführung nach Fig. 5 sind die Wandteile 7 so angeordnet, daß sie wabenförmige Hohlräume 8 in Kreisform bilden. Diese Ausgestaltung hat den Vorteil einer sehr preisgünstig anfertigbaren Kunststoff - Spritzform.

In der Anordnung nach Fig. 6 bilden die Wandteile 7 wabenförmige Hohlräume 8. Die damit erzielbare Federkennlinie ist sehr weich und infolgedessen vorzugsweise für Heimgymnastikmatten für Kinder, Jugendliche oder leichtgewichtige Personen empfehlenswert.

Die erfindungsgemäße Ausgestaltung und der Grundaufbau der Gymnastikmatte nach der Erfindung zeichnet sich prinzipiell durch ein ungewöhnlich hohes Maß an Flexibilität in der Anpaßbarkeit an unterschiedliche Beanspruchungen aus. Allein schon durch individuelle Auswahl und/oder Dicke oder Mehrlagigkeit der Zwischenschicht 3 läßt sich das "Trittgefühl" entsprechend den persönlichen Wünschen des Übenden subjektiv optimieren. Ähnlich vorteilhaft wirkt sich die unkomplizierte Auswechselbarkeit des Bezuges 4 aus. Je nach persönlichen Wünschen kann ein "hartes" oder ein "weiches" Tuch verwendet werden und jeder Übende kann bei wechselnder Benutzung seinen eigenen Bezug 4 benutzen, insbesondere aus Gründen der individuellen Hygiene. Diese Vorteile können auch wirklich ausgeschöpft werden, da die erfindungemäße Heimgymnastikmatte dies im Rahmen tragbarer Kosten ermöglicht.

Aus dem erfindungsgemäßen Zusammenwirken der einzelnen Teile der Heimgymnastikmatte ergibt sich demnach eine überraschend günstige Gesamtwirkung. Dabei ist die Matte relativ flach und flexibel, weshalb sie auch ohne Schwierigkeit zu einem Bündel zusammengerollt und leicht in einer mittleren Gepäcktasche verstaut werden kann. Dies ist wichtig und von Vorteil für eine unbeschwerte Mitnahme zur Übungsstätte, auf Reisen oder auch Zuhause für ein problemloses Verstauen in Schränken oder Regalen.

Die erfindungsgemäße Übungsmatte ist zwar insbesondere als Heimgymnastikmatte gedacht, sie ist jedoch nicht auf die Verwendung als Heimgymnastikmatte beschränkt. Sie kann auch sehr vorteilhaft in Sporthallen, Schulen, etc. verwendet werden.

Anlage zum Patentgesuch                    Mas/83/1Eu
von Peter Masnick
4600 Dortmund 1

Gymnastikmatte, insbesondere Heimgymnastikmatte

## Patentansprüche

1. Gymnastikmatte, insbesondere Heimgymnastikmatte, mit einer Bodenschicht, einer Deckschicht sowie gegebenenfalls Zwischenschichten, d a d u r c h   g e k e n n - z e i c h n e t, daß die Bodenschicht ein im Verhältnis zu seiner Erstreckung relativ flaches, senkrecht zu seiner Fläche federnd wirkendes Formteil (2) ist, das eine Vielzahl von angeordneten Stegen (7) aus elastischem Werkstoff aufweist, die zellenartige Hohlräume (8) bilden.

2. Gymnastikmatte nach Anspruch 1, d a d u r c h   g e - k e n n z e i c h n e t, daß die Hohlräume (8) an der Oberseite (5) des Formteiles (2) durch eine sie verbindende Deckplatte (9) verschlossen, an der Unterseite (6) jedoch offen ausgebildet sind.

3. Gymnastikmatte nach einem der Ansprüche 1 oder 2, d a - d u r c h   g e k e n n z e i c h n e t, daß das Formteil (2) aus elastischem Material wie Gummi vorzugsweise mittelweichem Gummi oder Kunststoff einstückig formbar und entformbar hergestellt ist.

4. Gymnastikmatte nach einem der Ansprüche 1, 2 oder 3, d a d u r c h   g e k e n n z e i c h n e t, daß die Stege (7) annähernd vertikal oder schräg verlaufend angeordnet sind.

5. Gymnastikmatte nach Anspruch 4, d a d u r c h   g e - k e n n z e i c h n e t, daß die Wandteile (7) wabenförmige Hohlräume (8) bildend in Vieleckform wie Dreieck, Viereck, Sechseck etc. oder in Kreisform angeordnet sind.

6. Gymnastikmatte nach einem der Ansprüche 1, 2, 3, 4 oder 5, d a d u r c h   g e k e n n z e i c h n e t, daß die Wandteile (7) im Verhältnis zur Querschnittsfläche eines Hohlraumes (8) relativ dünnwandig ausgebildet sind und daß die Wanddicke, Anordnung und gegebenenfalls Stellung zur Vertikalen nach Maßgabe der vorgesehenen Federwirkung ausgestaltet ist.

7. Gymnastikmatte nach einem der Ansprüche 1, 2, 3, 4 oder 6, d a d u r c h   g e k e n n z e i c h n e t, daß das Formteil (2) je eine geschlossene Deckplatte (9) und Bodenplatte (15) und dazwischen einvulkanisierte, eingeschweißte oder eingeklebte, aus elastischem Material, vorzugsweise mittelweichem Gummi, in Wellenform angeordnete Wandteile (7') aufweist.

8. Gymnastikmatte nach einem der Ansprüche 1 bis 7, d a - d u r c h   g e k e n n z e i c h n e t, daß die Deckschicht als abnehmbarer Bezug (4) aus waschbarem,

0092837

strapazierfähigem Tuch ausgebildet ist und daß der Bezug vorzugsweise an seiner Randpartie (12) elastisch eingekräuselt, über den Rand (11) der Oberseite (5) des Formteiles (2) überstülpbar ausgebildet ist.

9. Gymnastikmatte nach Anspruch 8, d a d u r c h  g e - k e n n z e i c h n e t, daß der Bezug (4) mit Verbindungselementen wie Ösen und Schnüren, Klettband, Druckknöpfen oder ähnlichen befestigt ist.

10. Gymnastikmatte nach einem der Ansprüche 8 oder 9, d a d u r c h  g e k e n n z e i c h n e t, daß zwischen Oberseite (5) und Bezug (4) eine nachgiebige, vorzugsweise textile Zwischenschicht (3) aus z.B. Dickfilz, teppichartigem Textilgewirk (13,14), Vließstoff, Schaumstoff oder ähnlichem angeordnet ist.

11. Gymnastikmatte nach Anspruch 10, d a d u r c h  g e - k e n n z e i c h n e t, daß die nachgiebige Zwischenschicht (3), vorzugsweise eine separate Hülle aufweisend, mehrlagig ausgebildet ist und z.B. eine relativ weiche Schaumstoffschicht sowie eine relativ harte textile Zwischenschicht aufweist.

12. Gymnastikmatte nach Anspruch 11, d a d u r c h  g e - k e n n z e i c h n e t, daß die mehrlagige Zwischenschicht (3) aus einer zwei bis fünf, vorzugsweise drei cm dicken Krümelschaumschicht sowie einer dünneren Weichschaumschicht besteht.

- Beschreibung -

0092837

FIG. 1

FIG. 2

FIG. 3

FIG. 4

0092837

FIG. 5

FIG.6